(19) Europäisches Patentamt
European Patent Office
Office européen des brevets

(11) **EP 4 498 675 A1**

(12) **EUROPEAN PATENT APPLICATION**
published in accordance with Art. 153(4) EPC

(43) Date of publication:
**29.01.2025 Bulletin 2025/05**

(21) Application number: **23827468.2**

(22) Date of filing: **19.06.2023**

(51) International Patent Classification (IPC):
**H04N 19/119** (2014.01)      **H04N 19/513** (2014.01)
**H04N 19/176** (2014.01)      **H04N 19/124** (2014.01)
**H04N 19/13** (2014.01)       **H04N 19/60** (2014.01)
**H04N 19/423** (2014.01)      **H04N 19/184** (2014.01)
**H04N 19/96** (2014.01)       **H04N 19/11** (2014.01)

(52) Cooperative Patent Classification (CPC):
**H04N 19/11; H04N 19/119; H04N 19/124;
H04N 19/13; H04N 19/132; H04N 19/176;
H04N 19/184; H04N 19/423; H04N 19/513;
H04N 19/60; H04N 19/96**

(86) International application number:
**PCT/KR2023/008461**

(87) International publication number:
**WO 2023/249353 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.06.2022  KR 20220074595**

(71) Applicants:
• **Hyundai Motor Company**
  **Seoul 06797 (KR)**
• **Kia Corporation**
  **Seocho-gu**
  **Seoul 06797 (KR)**

(72) Inventors:
• **HEO, Jin**
  **Yongin-si Gyeonggi-do 16836 (KR)**
• **PARK, Seung Wook**
  **Yongin-si Gyeonggi-do 16847 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **IMAGE ENCODING/DECODING METHOD AND APPARATUS, AND RECORDING MEDIUM HAVING BITSTREAM STORED THEREIN**

(57) An image decoding method may comprise partitioning a current block into a first partition and a second partition according to a partitioning boundary, determining a first prediction block for the first partition and a second prediction block for the second partition, determining a width of a blending area around the partitioning boundary, determining a first weight and a second weight for determining a final prediction sample of the blending area based on the width of the blending area, and determining a final prediction block from the first prediction block and the second prediction block based on the first weight and the second weight.

EP 4 498 675 A1

FIG. 10

START

1002

PARTITION CURRENT BLOCK INTO FIRST
PARTITION AND SECOND PARTITION
ACCORDING TO PARTITIONING BOUNDARY

1004

DETERMINE FIRST PREDICTION BLOCK
FOR FIRST PARTITION AND SECOND
PREDICTION BLOCK FOR SECOND PARTITION

1006

DETERMINE WIDTH OF BLENDING AREA
AROUND PARTITIONING BOUNDARY

1008

DETERMINE FIRST WEIGHT AND SECOND
WEIGHT FOR DETERMINING FINAL
PREDICTION SAMPLE OF BLENDING AREA
BASED ON WIDTH OF BLENDING WIDTH

1010

DETERMINE FINAL PREDICTION BLOCK
FROM FIRST PREDICTION BLOCK AND
SECOND PREDICTION BLOCK BASED ON
FIRST WEIGHT AND SECOND WEIGHT

END

## EP 4 498 675 A1

**Description**

**Technical Field**

The present invention relates to an image encoding/decoding method and apparatus and a recording medium storing a bitstream. More particularly, the present invention relates to an image encoding/decoding method and apparatus using an inter prediction method and a recording medium storing a bitstream.

**Background Art**

Recently, the demand for high-resolution, high-quality images such as ultra-high definition (UHD) images is increasing in various application fields. As image data becomes higher in resolution and quality, the amount of data increases relatively compared to existing image data. Therefore, when transmitting image data using media such as existing wired and wireless broadband lines or storing image data using existing storage media, the transmission and storage costs increase. In order to solve these problems that occur as image data becomes higher in resolution and quality, high-efficiency image encoding/decoding technology for images with higher resolution and quality is required.

In inter prediction, a method of partitioning a coding unit block into partitions with various shapes and performing prediction according to different motion information for each partition has been discussed. At this time, various methods for accurately predicting a blending area of the partitioning boundary of the partition have been discussed.

**Disclosure**

**Technical Problem**

An object of the present invention is to provide an image encoding/decoding method and apparatus with improved encoding/decoding efficiency.

Another object of the present invention is to provide a recording medium storing a bitstream generated by an image decoding method or apparatus provided by the present invention.

**Technical Solution**

An image decoding method according to an embodiment of the present invention may comprise partitioning a current block into a first partition and a second partition according to a partitioning boundary, determining a first prediction block for the first partition and a second prediction block for the second partition, determining a width of a blending area around the partitioning boundary, determining a first weight and a second weight for determining a final prediction sample of the blending area based on the width of the blending area, and determining a final prediction block from the first prediction block and the second prediction block based on the first weight and the second weight.

According to an embodiment, in the determining the width of the blending area, the width of the blending area may be determined based on a size value of the current block.

According to an embodiment, the width of the blending area may be determined according to a size interval including the size value of the current block.

According to an embodiment, the width of the blending area may be selected from among a plurality of width candidates corresponding to the size interval including the size value of the current block.

According to an embodiment, the size value of the current block may be determined by at least one of a width of the current block, a height of the current block, a larger value among the width and height of the current block, a smaller value among the width and height of the current block, or a ratio of the width and height of the current block.

According to an embodiment, the width of the blending area may be selected from among a plurality of width candidates based on blending area width information indicating the width of the blending area parsed from a bitstream.

According to an embodiment, the width of the blending area may be determined depending on whether a current picture or a current slice including the current block is a screen content image.

According to an embodiment, the width of the blending area may be determined to be 0 or 1/4 when the current picture or the current slice including the current block is a screen content image.

According to an embodiment, the determining the first weight and the second weight may comprise determining maximum values of the first weight and the second weight based on the width of the blending area and determining the first weight and the second weight based on the maximum values.

According to an embodiment, in the determining the maximum values of the first weight and the second weight, the maximum values of the first weight and the second weight may be set to increase as the width of the blending area increases.

According to an embodiment, the determining the first weight and the second weight may comprise determining maximum values of the first weight and the second weight based on width candidates of the blending area applied to the current block and determining the first weight and the second weight based on the maximum values.

According to an embodiment, the determining the maximum values of the first weight and the second weight may comprise determining the maximum values of the first weight and the second weight based on a largest width candidate or a smallest width candidate among the width candidates of the blending area.

According to an embodiment, in the determining the first weight and the second weight, the first weight and the second weight may be determined based on a position of a sample of the blending area and a distance of the partitioning boundary.

According to an embodiment, the first weight and the second weight may be determined based on a nonlinear function which receives as input the position of the sample of the blending area and the distance of the partitioning boundary.

According to an embodiment, the nonlinear function may be composed of at least one of a higher-order function such as a quadratic function or higher, an exponential function or a logarithmic function.

An image encoding method according to an embodiment of the present invention may comprise partitioning a current block into a first partition and a second partition according to a partitioning boundary, determining a first prediction block for the first partition and a second prediction block for the second partition, determining a width of a blending area around the partitioning boundary, determining a first weight and a second weight for determining a final prediction sample of the blending area based on the width of the blending area, and determining a final prediction block from the first prediction block and the second prediction block based on the first weight and the second weight.

A non-transitory computer-readable recording medium according to an embodiment of the present invention may store a bitstream generated by the image encoding method.

A transmission method according to an embodiment of the present invention transmits a bitstream generated by the image encoding method.

The features briefly summarized above with respect to the present disclosure are merely exemplary aspects of the detailed description below of the present invention, and do not limit the scope of the present invention.

## Advantageous Effects

The present invention proposes various embodiments of a method of adaptively determining the width of a blending area in a geometric partitioning mode to improve prediction accuracy of inter prediction.

In addition, the present invention proposes various embodiments of a method of determining a weight required for blending area prediction in a geometric partitioning mode to improve prediction accuracy of inter prediction.

In the present invention, as accuracy of inter prediction is improved, overall encoding efficiency can be improved.

## Description of Drawings

FIG. 1 is a block diagram showing a configuration of an encoding apparatus according to an embodiment of the present invention.

FIG. 2 is a block diagram showing a configuration of a decoding apparatus according to an embodiment of the present invention.

FIG. 3 is a diagram schematically showing a video coding system to which the present invention is applicable.

FIG. 4 shows a method of generating a prediction signal of a blending area around a partitioning boundary in a geometric partitioning mode.

FIG. 5 shows a graph of a weight of a prediction signal of a first partition according to Equation 2.

FIG. 6 shows weights for the various widths of a blending area.

FIG. 7 shows a maximum value of a weight that is variably determined according to a width of a blending area.

FIG. 8 shows an example of a graph of a weight of a prediction signal of a first partition having nonlinearity.

FIG. 9 shows another example of a graph of a weight of a prediction signal of a first partition having nonlinearity.

FIG. 10 shows an embodiment of a prediction method according to a geometric partitioning mode according to the present invention.

FIG. 11 exemplarily illustrates a content streaming system to which an embodiment according to the present invention is applicable.

**Best Mode**

An image decoding method according to an embodiment of the present invention may comprise partitioning a current block into a first partition and a second partition according to a partitioning boundary, determining a first prediction block for the first partition and a second prediction block for the second partition, determining a width of a blending area around the partitioning boundary, determining a first weight and a second weight for determining a final prediction sample of the blending area based on the width of the blending area, and determining a final prediction block from the first prediction block and the second prediction block based on the first weight and the second weight.

**Mode for Invention**

The present invention may have various modifications and embodiments, and specific embodiments are illustrated in the drawings and described in detail in the detailed description. However, this is not intended to limit the present invention to specific embodiments, but should be understood to include all modifications, equivalents, or substitutes included in the spirit and technical scope of the present invention. Similar reference numerals in the drawings indicate the same or similar functions throughout various aspects. The shapes and sizes of elements in the drawings may be provided by way of example for a clearer description. The detailed description of the exemplary embodiments described below refers to the accompanying drawings, which illustrate specific embodiments by way of example. These embodiments are described in sufficient detail to enable those skilled in the art to practice the embodiments. It should be understood that the various embodiments are different from each other, but are not necessarily mutually exclusive. For example, specific shapes, structures, and characteristics described herein may be implemented in other embodiments without departing from the spirit and scope of the present invention with respect to one embodiment. It should also be understood that the positions or arrangements of individual components within each disclosed embodiment may be changed without departing from the spirit and scope of the embodiment. Accordingly, the detailed description set forth below is not intended to be limiting, and the scope of the exemplary embodiments is defined only by the appended claims, along with the full scope of equivalents to which such claims are entitled, if properly described.

In the present invention, the terms first, second, etc. may be used to describe various components, but the components should not be limited by the terms. The terms are only used for the purpose of distinguishing one component from another. For example, without departing from the scope of the present invention, the first component may be referred to as the second component, and similarly, the second component may also be referred to as the first component. The term and/or includes a combination of a plurality of related described items or any item among a plurality of related described items.

The components shown in the embodiments of the present invention are independently depicted to indicate different characteristic functions, and do not mean that each component is formed as a separate hardware or software configuration unit. That is, each component is listed and included as a separate component for convenience of explanation, and at least two of the components may be combined to form a single component, or one component may be divided into multiple components to perform a function, and embodiments in which components are integrated and embodiments in which each component is divided are also included in the scope of the present invention as long as they do not deviate from the essence of the present invention.

The terminology used in the present invention is only used to describe specific embodiments and is not intended to limit the present invention. The singular expression includes the plural expression unless the context clearly indicates otherwise. In addition, some components of the present invention are not essential components that perform essential functions in the present invention and may be optional components only for improving performance. The present invention may be implemented by including only essential components for implementing the essence of the present invention excluding components only used for improving performance, and a structure including only essential components excluding optional components only used for improving performance is also included in the scope of the present invention.

In an embodiment, the term "at least one" may mean one of a number greater than or equal to 1, such as 1, 2, 3, and 4. In an embodiment, the term "a plurality of" may mean one of a number greater than or equal to 2, such as 2, 3, and 4.

Hereinafter, embodiments of the present invention will be specifically described with reference to the drawings. In describing the embodiments of this specification, if it is determined that a detailed description of a related known configuration or function may obscure the subject matter of this specification, the detailed description will be omitted, and the same reference numerals will be used for the same components in the drawings, and repeated descriptions of the same components will be omitted.

Description of terms

Hereinafter, "image" may mean one picture constituting a video, and may also refer to the video itself. For example, "encoding and/or decoding of an image" may mean "encoding and/or decoding of a video," and may also mean "encoding and/or decoding of one of images constituting the video."

Hereinafter, "moving image" and "video" may be used with the same meaning and may be used interchangeably. In addition, a target image may be an encoding target image that is a target of encoding and/or a decoding target image that is a target of decoding. In addition, the target image may be an input image input to an encoding apparatus and may be an input image input to a decoding apparatus. Here, the target image may have the same meaning as a current image.

Hereinafter, "image", "picture", "frame" and "screen" may be used with the same meaning and may be used interchangeably.

Hereinafter, a "target block" may be an encoding target block that is a target of encoding and/or a decoding target block that is a target of decoding. In addition, the target block may be a current block that is a target of current encoding and/or decoding. For example, "target block" and "current block" may be used with the same meaning and may be used interchangeably.

Hereinafter, "block" and "unit" may be used with the same meaning and may be used interchangeably. In addition, "unit" may mean including a luma component block and a chroma component block corresponding thereto in order to distinguish it from a block. For example, a coding tree unit (CTU) may be composed of one luma component (Y) coding tree block (CTB) and two chroma component (Cb, Cr) coding tree blocks related to it.

Hereinafter, "sample", "picture element" and "pixel" may be used with the same meaning and may be used interchangeably. Herein, a sample may represent a basic unit that constitutes a block.

Hereinafter, "inter" and "inter-screen" may be used with the same meaning and can be used interchangeably.

Hereinafter, "intra" and "in-screen" may be used with the same meaning and can be used interchangeably.

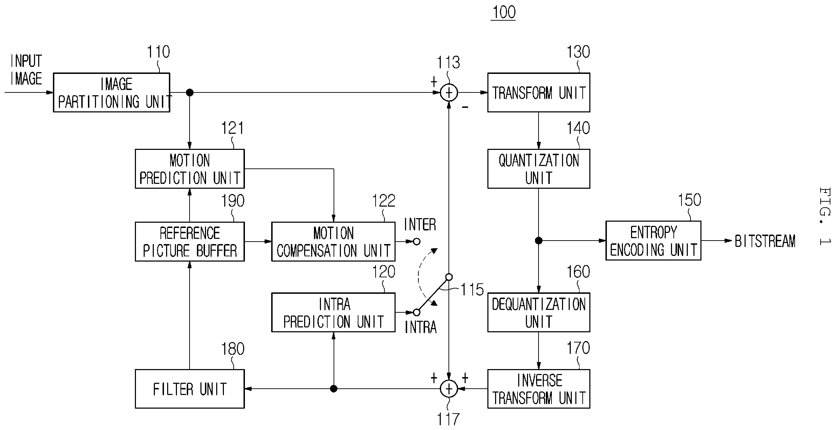

FIG. 1 is a block diagram showing a configuration of an encoding apparatus according to an embodiment of the present invention.

The encoding apparatus 100 may be an encoder, a video encoding apparatus, or an image encoding apparatus. A video may include one or more images. The encoding apparatus 100 may sequentially encode one or more images.

Referring to FIG. 1, the encoding apparatus 100 may include an image partitioning unit 110, an intra prediction unit 120, a motion prediction unit 121, a motion compensation unit 122, a switch 115, a subtractor 113, a transform unit 130, a quantization unit 140, an entropy encoding unit 150, a dequantization unit 160, an inverse transform unit 170, an adder 117, a filter unit 180 and a reference picture buffer 190.

In addition, the encoding apparatus 100 may generate a bitstream including information encoded through encoding of an input image, and output the generated bitstream. The generated bitstream may be stored in a computer-readable recording medium, or may be streamed through a wired/wireless transmission medium.

The image partitioning unit 110 may partition the input image into various forms to increase the efficiency of video encoding/decoding. That is, the input video is composed of multiple pictures, and one picture may be hierarchically partitioned and processed for compression efficiency, parallel processing, etc. For example, one picture may be partitioned into one or multiple tiles or slices, and then partitioned again into multiple CTUs (Coding Tree Units). Alternatively, one picture may first be partitioned into multiple sub-pictures defined as groups of rectangular slices, and each sub-picture may be partitioned into the tiles/slices. Here, the sub-picture may be utilized to support the function of partially independently encoding/decoding and transmitting the picture. Since multiple sub-pictures may be individually reconstructed, it has the advantage of easy editing in applications that configure multi-channel inputs into one picture. In addition, a tile may be divided horizontally to generate bricks. Here, the brick may be utilized as the basic unit of parallel processing within the picture. In addition, one CTU may be recursively partitioned into quad trees (QTs), and the terminal node of the partition may be defined as a CU (Coding Unit). The CU may be partitioned into a PU (Prediction Unit), which is a prediction unit, and a TU (Transform Unit), which is a transform unit, to perform prediction and partition. Meanwhile, the CU may be utilized as the prediction unit and/or the transform unit itself. Here, for flexible partition, each CTU may be recursively partitioned into multi-type trees (MTTs) as well as quad trees (QTs). The partition of the CTU into multi-type trees may start from the terminal node of the QT, and the MTT may be composed of a binary tree (BT) and a triple tree (TT). For example, the MTT structure may be classified into a vertical binary split mode (SPLIT_BT_VER), a horizontal binary split mode (SPLIT_BT_HOR), a vertical ternary split mode (SPLIT_TT_VER), and a horizontal ternary split mode (SPLIT_TT_HOR). In addition, a minimum block size (MinQTSize) of the quad tree of the luma block during partition may be set to 16x16, a maximum block size (MaxBtSize) of the binary tree may be set to 128x128, and a maximum block size (MaxTtSize) of the triple tree may be set to 64x64. In addition, a minimum block size (MinBtSize) of the binary tree and a minimum block size (MinTtSize) of the triple tree may be specified as 4x4, and the maximum depth (MaxMttDepth) of the multi-type tree may be specified as 4. In addition, in order to increase the encoding efficiency of the I slice, a dual tree that differently uses CTU partition structures of luma and chroma components may be applied. The above quad-tree structure may include a rectangular quad-tree structure and a triangular quad-tree tree structure to which geometric partitioning is applied. And the above ternary tree structure may include a rectangular ternary tree structure and an asymmetric ternary tree structure to which geometric partitioning is applied. The above binary tree structure may include a rectangular binary tree structure and a geometric binary tree structure to which geometric partitioning is applied. On the other hand, in P and B slices, the luma and chroma CTBs (Coding Tree Blocks) within the CTU may be partitioned into a single tree that shares the coding tree structure.

The encoding apparatus 100 may perform encoding on the input image in the intra mode and/or the inter mode. Alternatively, the encoding apparatus 100 may perform encoding on the input image in a third mode (e.g., IBC mode, Palette mode, etc.) other than the intra mode and the inter mode. However, if the third mode has functional characteristics similar to the intra mode or the inter mode, it may be classified as the intra mode or the inter mode for convenience of explanation. In the present invention, the third mode will be classified and described separately only when a specific description thereof is required.

When the intra mode is used as the prediction mode, the switch 115 may be switched to intra, and when the inter mode is used as the prediction mode, the switch 115 may be switched to inter. Here, the intra mode may mean an intra prediction mode, and the inter mode may mean an inter prediction mode. The encoding apparatus 100 may generate a prediction block for an input block of the input image. In addition, the encoding apparatus 100 may encode a residual block using a residual of the input block and the prediction block after the prediction block is generated. The input image may be referred to as a current image which is a current encoding target. The input block may be referred to as a current block which is a current encoding target or an encoding target block.

When a prediction mode is an intra mode, the intra prediction unit 120 may use a sample of a block that has been already encoded/decoded around a current block as a reference sample. The intra prediction unit 120 may perform spatial prediction for the current block by using the reference sample, or generate prediction samples of an input block through spatial prediction. Herein, the intra prediction may mean in-screen prediction.

As an intra prediction method, non-directional prediction modes such as DC mode and Planar mode and directional prediction modes (e.g., 65 directions) may be applied. Here, the intra prediction method may be expressed as an intra prediction mode or an in-screen prediction mode.

When a prediction mode is an inter mode, the motion prediction unit 111 may retrieve a region that best matches with an input block from a reference image in a motion prediction process, and derive a motion vector by using the retrieved region. In this case, a search region may be used as the region. The reference image may be stored in the reference picture buffer 190. Here, when encoding/decoding for the reference image is performed, it may be stored in the reference picture buffer 190.

The motion compensation unit 122 may generate a prediction block of the current block by performing motion compensation using a motion vector. Herein, inter prediction may mean inter-screen prediction or motion compensation.

When the value of the motion vector is not an integer, the motion prediction unit 121 and the motion compensation unit 122 may generate the prediction block by applying an interpolation filter to a partial region of the reference picture. In order to perform inter prediction or motion compensation, it may be determined whether the motion prediction and motion compensation mode of the prediction unit included in the coding unit is one of a skip mode, a merge mode, an advanced motion vector prediction (AMVP) mode, and an intra block copy (IBC) mode based on the coding unit and inter prediction or motion compensation may be performed according to each mode.

In addition, based on the above inter prediction method, an AFFINE mode of sub-PU based prediction, an SbTMVP (Subblock-based Temporal Motion Vector Prediction) mode, an MMVD (Merge with MVD) mode of PU-based prediction, and a GPM (Geometric Partitioning Mode) mode may be applied. In addition, in order to improve the performance of each mode, HMVP (History based MVP), PAMVP (Pairwise Average MVP), CIIP (Combined Intra/Inter Prediction), AMVR (Adaptive Motion Vector Resolution), BDOF (Bi-Directional Optical-Flow), BCW (Bi-predictive with CU Weights), LIC (Local Illumination Compensation), TM (Template Matching), OBMC (Overlapped Block Motion Compensation), etc. may be applied.

The subtractor 113 may generate a residual block by using a difference between an input block and a prediction block. The residual block may be called a residual signal. The residual signal may mean a difference between an original signal and a prediction signal. Alternatively, the residual signal may be a signal generated by transforming or quantizing, or transforming and quantizing a difference between the original signal and the prediction signal. The residual block may be a residual signal of a block unit.

The transform unit 130 may generate a transform coefficient by performing transform on a residual block, and output the generated transform coefficient. Herein, the transform coefficient may be a coefficient value generated by performing transform on the residual block. When a transform skip mode is applied, the transform unit 130 may skip transform of the residual block.

A quantized level may be generated by applying quantization to the transform coefficient or to the residual signal. Hereinafter, the quantized level may also be called a transform coefficient in embodiments.

For example, a 4x4 luma residual block generated through intra prediction is transformed using a base vector based on DST (Discrete Sine Transform), and transform may be performed on the remaining residual block using a base vector based on DCT (Discrete Cosine Transform). In addition, a transform block is partitioned into a quad tree shape for one block using RQT (Residual Quad Tree) technology, and after performing transform and quantization on each transformed block partitioned through RQT, a coded block flag (cbf) may be transmitted to increase encoding efficiency when all coefficients become 0.

As another alternative, the Multiple Transform Selection (MTS) technique, which selectively uses multiple transform bases to perform transform, may be applied. That is, instead of partitioning a CU into TUs through RQT, a function similar to TU partition may be performed through the sub-block Transform (SBT) technique. Specifically, SBT is applied only to inter prediction blocks, and unlike RQT, the current block may be partitioned into ½ or ¼ sizes in the vertical or horizontal direction and then transform may be performed on only one of the blocks. For example, if it is partitioned vertically, transform may be performed on the leftmost or rightmost block, and if it is partitioned horizontally, transform may be performed on the topmost or bottommost block.

In addition, LFNST (Low Frequency Non-Separable Transform), a secondary transform technique that additionally transforms the residual signal transformed into the frequency domain through DCT or DST, may be applied. LFNST additionally performs transform on the low-frequency region of 4x4 or 8x8 in the upper left, so that the residual coefficients may be concentrated in the upper left.

The quantization unit 140 may generate a quantized level by quantizing the transform coefficient or the residual signal according to a quantization parameter (QP), and output the generated quantized level. Herein, the quantization unit 140 may quantize the transform coefficient by using a quantization matrix.

For example, a quantizer using QP values of 0 to 51 may be used. Alternatively, if the image size is larger and high encoding efficiency is required, the QP of 0 to 63 may be used. Also, a DQ (Dependent Quantization) method using two quantizers instead of one quantizer may be applied. DQ performs quantization using two quantizers (e.g., Q0 and Q1), but even without signaling information about the use of a specific quantizer, the quantizer to be used for the next transform coefficient may be selected based on the current state through a state transition model.

The entropy encoding unit 150 may generate a bitstream by performing entropy encoding according to a probability distribution on values calculated by the quantization unit 140 or on coding parameter values calculated when performing encoding, and output the bitstream. The entropy encoding unit 150 may perform entropy encoding of information on a sample of an image and information for decoding an image. For example, the information for decoding the image may include a syntax element.

When entropy encoding is applied, symbols are represented so that a smaller number of bits are assigned to a symbol having a high occurrence probability and a larger number of bits are assigned to a symbol having a low occurrence probability, and thus, the size of bit stream for symbols to be encoded may be decreased. The entropy encoding unit 150 may use an encoding method, such as exponential Golomb, context-adaptive variable length coding (CAVLC), context-adaptive binary arithmetic coding (CABAC), etc., for entropy encoding. For example, the entropy encoding unit 150 may perform entropy encoding by using a variable length coding/code (VLC) table. In addition, the entropy encoding unit 150 may derive a binarization method of a target symbol and a probability model of a target symbol/bin, and perform arithmetic coding by using the derived binarization method, and a context model.

In relation to this, when applying CABAC, in order to reduce the size of the probability table stored in the decoding apparatus, a table probability update method may be changed to a table update method using a simple equation and applied. In addition, two different probability models may be used to obtain more accurate symbol probability values.

In order to encode a transform coefficient level (quantized level), the entropy encoding unit 150 may change a two-dimensional block form coefficient into a one-dimensional vector form through a transform coefficient scanning method.

A coding parameter may include information (flag, index, etc.) encoded in the encoding apparatus 100 and signaled to the decoding apparatus 200, such as syntax element, and information derived in the encoding or decoding process, and may mean information required when encoding or decoding an image.

Herein, signaling the flag or index may mean that a corresponding flag or index is entropy encoded and included in a bitstream in an encoder, and may mean that the corresponding flag or index is entropy decoded from a bitstream in a decoder.

The encoded current image may be used as a reference image for another image to be processed later. Therefore, the encoding apparatus 100 may reconstruct or decode the encoded current image again and store the reconstructed or decoded image as a reference image in the reference picture buffer 190.

A quantized level may be dequantized in the dequantization unit 160, or may be inversely transformed in the inverse transform unit 170. A dequantized and/or inversely transformed coefficient may be added with a prediction block through the adder 117. Herein, the dequantized and/or inversely transformed coefficient may mean a coefficient on which at least one of dequantization and inverse transform is performed, and may mean a reconstructed residual block. The dequantization unit 160 and the inverse transform unit 170 may be performed as an inverse process of the quantization unit 140 and the transform unit 130.

The reconstructed block may pass through the filter unit 180. The filter unit 180 may apply a deblocking filter, a sample adaptive offset (SAO), an adaptive loop filter (ALF), a bilateral filter (BIF), luma mapping with chroma scaling (LMCS), etc. to a reconstructed sample, a reconstructed block or a reconstructed image using all or some filtering techniques. The filter unit 180 may be called an in-loop filter. In this case, the in-loop filter is also used as name excluding LMCS.

The deblocking filter may remove block distortion generated in boundaries between blocks. In order to determine whether or not to apply a deblocking filter, whether or not to apply a deblocking filter to a current block may be determined based on samples included in several rows or columns which are included in the block. When a deblocking filter is applied to a block, a different filter may be applied according to a required deblocking filtering strength.

In order to compensate for encoding error using sample adaptive offset, a proper offset value may be added to a sample value. The sample adaptive offset may correct an offset of a deblocked image from an original image by a sample unit. A method of partitioning a sample included in an image into a predetermined number of regions, determining a region to which an offset is applied, and applying the offset to the determined region, or a method of applying an offset in consideration of edge information on each sample may be used.

A bilateral filter (BIF) may also correct the offset from the original image on a sample-by-sample basis for the image on which deblocking has been performed.

The adaptive loop filter may perform filtering based on a comparison result of the reconstructed image and the original image. Samples included in an image may be partitioned into predetermined groups, a filter to be applied to each group may be determined, and differential filtering may be performed for each group. Information of whether or not to apply the ALF may be signaled by coding units (CUs), and a form and coefficient of the adaptive loop filter to be applied to each block may vary.

In LMCS (Luma Mapping with Chroma Scaling), luma mapping (LM) means remapping luma values through a piece-wise linear model, and chroma scaling (CS) means a technique for scaling the residual value of the chroma component according to the average luma value of the prediction signal. In particular, LMCS may be utilized as an HDR correction technique that reflects the characteristics of HDR (High Dynamic Range) images.

The reconstructed block or the reconstructed image having passed through the filter unit 180 may be stored in the reference picture buffer 190. A reconstructed block that has passed through the filter unit 180 may be a part of a reference image. That is, the reference image is a reconstructed image composed of reconstructed blocks that have passed through the filter unit 180. The stored reference image may be used later in inter prediction or motion compensation.

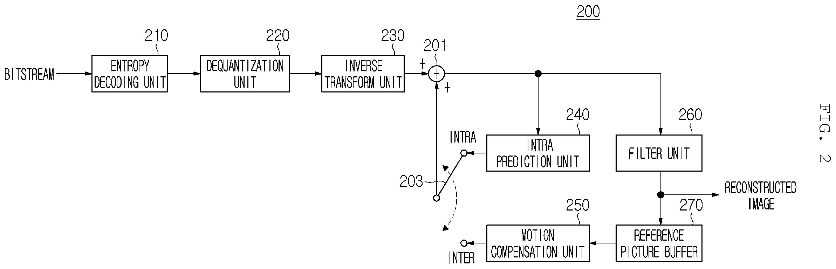

FIG. 2 is a block diagram showing a configuration of a decoding apparatus according to an embodiment of the present invention.

A decoding apparatus 200 may a decoder, a video decoding apparatus, or an image decoding apparatus.

Referring to FIG. 2, the decoding apparatus 200 may include an entropy decoding unit 210, a dequantization unit 220, an inverse transform unit 230, an intra prediction unit 240, a motion compensation unit 250, an adder 201, a switch 203, a filter unit 260, and a reference picture buffer 270.

The decoding apparatus 200 may receive a bitstream output from the encoding apparatus 100. The decoding apparatus 200 may receive a bitstream stored in a computer-readable recording medium, or may receive a bitstream that is streamed through a wired/wireless transmission medium. The decoding apparatus 200 may decode the bitstream in an intra mode or an inter mode. In addition, the decoding apparatus 200 may generate a reconstructed image generated through decoding or a decoded image, and output the reconstructed image or decoded image.

When a prediction mode used for decoding is an intra mode, the switch 203 may be switched to intra. Alternatively, when a prediction mode used for decoding is an inter mode, the switch 203 may be switched to inter.

The decoding apparatus 200 may obtain a reconstructed residual block by decoding the input bitstream, and generate a prediction block. When the reconstructed residual block and the prediction block are obtained, the decoding apparatus 200 may generate a reconstructed block that becomes a decoding target by adding the reconstructed residual block and the prediction block. The decoding target block may be called a current block.

The entropy decoding unit 210 may generate symbols by entropy decoding the bitstream according to a probability distribution. The generated symbols may include a symbol of a quantized level form. Herein, an entropy decoding method may be an inverse process of the entropy encoding method described above.

The entropy decoding unit 210 may change a one-dimensional vector-shaped coefficient into a two-dimensional block-shaped coefficient through a transform coefficient scanning method to decode a transform coefficient level (quantized level).

A quantized level may be dequantized in the dequantization unit 220, or inversely transformed in the inverse transform unit 230. The quantized level may be a result of dequantization and/or inverse transform, and may be generated as a reconstructed residual block. Herein, the dequantization unit 220 may apply a quantization matrix to the quantized level. The dequantization unit 220 and the inverse transform unit 230 applied to the decoding apparatus may apply the same technology as the dequantization unit 160 and inverse transform unit 170 applied to the aforementioned encoding apparatus.

When an intra mode is used, the intra prediction unit 240 may generate a prediction block by performing, on the current block, spatial prediction that uses a sample value of a block which has been already decoded around a decoding target block. The intra prediction unit 240 applied to the decoding apparatus may apply the same technology as the intra prediction unit 120 applied to the aforementioned encoding apparatus.

When an inter mode is used, the motion compensation unit 250 may generate a prediction block by performing, on the current block, motion compensation that uses a motion vector and a reference image stored in the reference picture buffer 270. The motion compensation unit 250 may generate a prediction block by applying an interpolation filter to a partial region within a reference image when the value of the motion vector is not an integer value. In order to perform motion compensation, it may be determined whether the motion compensation method of the prediction unit included in the corresponding coding unit is a skip mode, a merge mode, an AMVP mode, or a current picture reference mode based on the coding unit, and motion compensation may be performed according to each mode. The motion compensation unit 250 applied to the decoding apparatus may apply the same technology as the motion compensation unit 122 applied to the encoding apparatus described above.

The adder 201 may generate a reconstructed block by adding the reconstructed residual block and the prediction block. The filter unit 260 may apply at least one of inverse-LMCS, a deblocking filter, a sample adaptive offset, and an adaptive loop filter to the reconstructed block or reconstructed image. The filter unit 260 applied to the decoding apparatus may apply the same filtering technology as that applied to the filter unit 180 applied to the aforementioned encoding apparatus.

The filter unit 260 may output the reconstructed image. The reconstructed block or reconstructed image may be stored in the reference picture buffer 270 and used for inter prediction. A reconstructed block that has passed through the filter unit 260 may be a part of a reference image. That is, a reference image may be a reconstructed image composed of reconstructed blocks that have passed through the filter unit 260. The stored reference image may be used later in inter prediction or motion compensation.

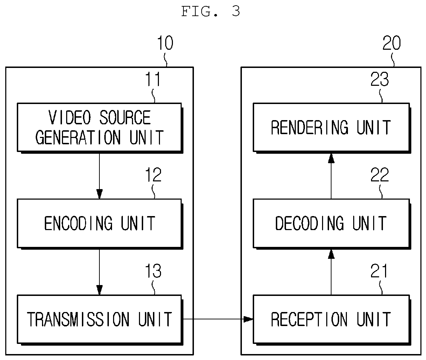

FIG. 3 is a diagram schematically showing a video coding system to which the present invention is applicable.

A video coding system according to an embodiment may include an encoding apparatus 10 and a decoding apparatus 20. The encoding apparatus 10 may transmit encoded video and/or image information or data to the decoding apparatus 20 in the form of a file or streaming through a digital storage medium or a network.

The encoding apparatus 10 according to an embodiment may include a video source generation unit 11, an encoding unit 12, a transmission unit 13. The decoding apparatus 20 according to an embodiment may include a reception unit 21, a decoding unit 22, and a rendering unit 23. The encoding unit 12 may be called a video/image encoding unit, and the decoding unit 22 may be called a video/image decoding unit. The transmission unit 13 may be included in the encoding unit 12. The reception unit 21 may be included in the decoding unit 22. The rendering unit 23 may include a display unit, and the display unit may be configured as a separate device or an external component.

The video source generation unit 11 may obtain the video/image through a process of capturing, synthesizing, or generating the video/image. The video source generation unit 11 may include a video/image capture device and/or a video/image generation device. The video/image capture device may include, for example, one or more cameras, a video/image archive including previously captured video/image, etc. The video/image generation device may include, for example, a computer, a tablet, and a smartphone, etc., and may (electronically) generate the video/image. For example, a virtual video/image may be generated through a computer, etc., in which case the video/image capture process may be replaced with a process of generating related data.

The encoding unit 12 may encode the input video/image. The encoding unit 12 may perform a series of procedures such as prediction, transform, and quantization for compression and encoding efficiency. The encoding unit 12 may output encoded data (encoded video/image information) in the form of a bitstream. The detailed configuration of the encoding unit 12 may also be configured in the same manner as the encoding apparatus 100 of FIG. 1 described above.

The transmission unit 13 may transmit encoded video/image information or data output in the form of a bitstream to the reception unit 21 of the decoding apparatus 20 through a digital storage medium or a network in the form of a file or streaming. The digital storage medium may include various storage media such as USB, SD, CD, DVD, Blu-ray, HDD, SSD, etc. The transmission unit 13 may include an element for generating a media file through a predetermined file format and may include an element for transmission through a broadcasting/communication network. The reception unit 21 may extract/receive the bitstream from the storage medium or the network and transmit it to the decoding unit 22.

The decoding unit 22 may decode the video/image by performing a series of procedures such as dequantization, inverse transform, and prediction corresponding to the operation of the encoding unit 12. The detailed configuration of the decoding unit 22 may also be configured in the same manner as the above-described decoding apparatus 200 of FIG. 2.

The rendering unit 23 may render the decoded video/image. The rendered video/image may be displayed through the display unit.

In the present invention, a method of variably adjusting the width and weight of a blending area in a geometric partitioning mode is provided.

A geometric partitioning mode (GPM) is a technology that partitions one coding unit (CU) into two partitions by a partitioning boundary, independently determines prediction signals respectively corresponding to the two partitions, and then generates a final prediction block by a weighted sum of the generated prediction signals. In the present invention, a method of generating a prediction signal of a blending area around a partitioning boundary that distinguishes between two partitions in a geometric partitioning mode is proposed.

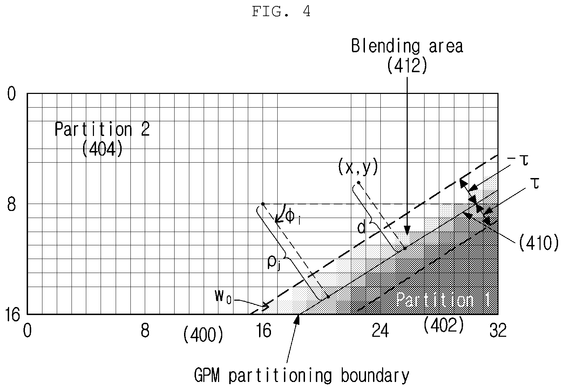

FIG. 4 shows a method of generating a prediction signal of a blending area around a partitioning boundary in a geometric partitioning mode.

In FIG. 4, a coding unit (CU) block 400 with a size of 32x16 is partitioned into a first partition 402 and a second partition 404 by a partitioning boundary 410. An area indicated by a dotted line in FIG. 4 is a blending area 412, which means an area separated by $-\tau$ to $\tau$ from the partitioning boundary 410. Prediction signals for the first partition 402 and the second partition 404, which are distinguished by the partitioning boundary 410, are generated independently. Equation 1 shows a method of determining a final prediction signal using the prediction signals for the first partition 402 and the second partition 404.

$$[Equation\ 1]$$

$$P_{GPM} = (W_0 \times P_0 + (W - W_0) \times P_1 + M) \gg N$$

In Equation 1, $P_0$ denotes the prediction signal of the first partition 402, and $P_1$ denotes the prediction signal of the second partition 404. In addition, in Equation 1, $W_0$ denotes a weight applied to the prediction signal $P_0$ of the first partition 402. The weights applied to $P_0$ and $P_1$ may be set to have all integers greater than 0. Accordingly, $W_0$ may be determined in the range of 0 to W. Here, W may be determined to be a value of an exponent of 2, such as 2, 4, 8, 16, 32, etc. In addition, the shift operation may be applied to the weighted sum of $P_0$ and $P_1$, according to the value of N. Here, N may be a log value of W with a base of 2. In addition, M is determined to be half of the value of W. Accordingly, if W is 8, N is determined to be 3 and M is determined to be 4.

According to an embodiment, if the position of a prediction pixel belongs to the blending area ($-\tau$ to $\tau$), a value in the range of 0 to W is used. If the position of the prediction pixel does not belong to the blending area, a value of 0 or W is used. Equation 2 shows a method of determining a weight $W_0$ according to the position of the prediction pixel.

$$[Equation\ 2]$$

$$W_0 = \begin{cases} 0, & d(x,y) \leq -\tau \\ \frac{W}{2\tau}(d(x,y) + \tau), & -\tau < d(x,y) \leq \tau \\ W, & d(x,y) > \tau \end{cases}$$

In Equation 2, $d(x,y)$ denotes displacement from the partitioning boundary to a pixel at a position $(x,y)$ as shown in FIG. 4. In addition, a threshold $\tau$ denotes a distance from the partitioning boundary to an end of the blending area. In Equation 2, the weight $W_0$ is defined by a ramp function with displacement and two thresholds $-\tau$ and $\tau$.

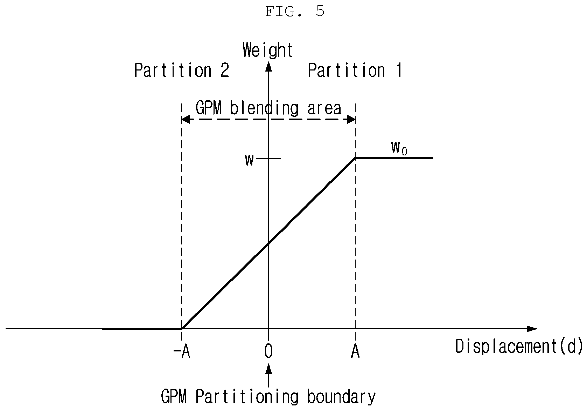

FIG. 5 shows a graph of the weight of the prediction signal of the first partition 402 according to Equation 2.

The threshold $\tau$ denotes the distance from the partitioning boundary to the end of the blending area. Therefore, the width of the blending area is determined according to the threshold $\tau$. In the present disclosure, the width of the blending area is actually determined according to the threshold $\tau$, so the threshold $\tau$ may be interpreted as the width of the blending area, or vice versa.

In FIG. 5, the value of $\tau$ is fixed to a predetermined value A. For example, the predetermined value may be determined to be 1, 2, 3, 4, etc. In addition, depending on the embodiment, the width of the blending area is not fixed, but is adaptively determined according to a predetermined condition, so that the video encoding efficiency can be improved. For example, a blending area with a wide width is suitable for encoding a video image with a large movement of an object in the image or a focus blur. On the other hand, a blending area with a narrow width is suitable for a video image without a focus blur or a screen content image. Therefore, a method of variably determining the width of the blending area will be discussed below.

Hereinafter, a method of variably determining the width of a blending area based on the size of a current coding unit (CU) block will be described. At this time, the size of the coding unit block may be defined as the width, height, aspect ratio (width/height or height/width), min(width, height), or max(width, height) of the coding unit block. Here, min(width, height) and max(width, height) denote the smaller and larger values among the width and height, respectively.

Equation 3 shows an embodiment of variably determining the width of the blending area based on the size information of the coding unit block.

[Equation 3]

$$\tau \ (threshold) = \begin{cases} 0 \ (non-blending), & size \leq S_1 \\ A, & S_1 < size \leq S_2 \\ 4A, & size > S_2 \end{cases}$$

In Equation 3, $S_1$ and $S_2$ denote arbitrary different positive integers ($S_1 < S_2$). In Equation 3, $S_2$ may be set to be smaller than the maximum width of the coding unit block or the maximum height of the coding unit block.

In Equation 3, the value of $\tau$ representing the width of the blending area is determined according to three size intervals distinguished according to $S_1$ and $S_2$. Unlike Equation 3, two size intervals or four or more size intervals may be set.

In FIG. 5, the value of $\tau$ is fixed to one, but according to Equation 3, the value of $\tau$ may be determined differently according to the size of the block. Specifically, the value of A of Equation 3 is an arbitrary positive integer. The value of $\tau$ may be determined to be a multiple of A for each size interval. For example, the value of $\tau$ corresponding to a specific size interval may be determined to be 0, A/4, A/2, A, 2A, 4A, 8A, etc. In addition, according to an embodiment, an arbitrary width value such as 3A or 5A may be used as a width candidate of the blending area. Here, non-blending ($\tau = 0$) means generating a final prediction block for a geometric partitioning mode by independent combination without generating blending prediction using a weighted value based on the partitioning boundary.

According to an embodiment, when the min(width, height) of the block is 4, the value of $\tau$ may be selected as A/2. In addition, when the min(width, height) of the block is 8, the value of $\tau$ may be selected as A. In addition, when the min(width, height) of the block is 16, the value of $\tau$ may be selected as 2A. In addition, when the min(width, height) of the block is 32, the value of $\tau$ may be selected as 4A. That is, the value of $\tau$ may increase in proportion to the magnitude of min(width, height). Here, A is an arbitrary positive integer corresponding to an exponent of 2.

According to an embodiment, the width of the blending area for a current coding unit block may be selected from N width candidates, where N is an integer greater than or equal to 2. If two width candidates are used in determining the width of the blending area, two width candidates may be selected from various width candidates such as 0, A/4, A/2, A, 2A, 4A, and 8A according to the size of the current coding unit block. In addition, one of the two selected width candidates may be selected for prediction of the current coding unit block. The width candidates may include an arbitrary width such as 3A or 5A.

For example, when 0 and A are used as width candidates of the blending area, the width of the blending area of the current coding unit block may be determined based on blending area width information indicating one of the two width candidates. The blending area width information may be parsed from a bitstream. Alternatively, the blending area width information may be determined from the current coding unit block or a current picture to which the current coding unit block belongs. For example, whether a reference picture referenced by each partition of the current coding unit block is the same, the slice type of the current picture, whether the image of the current picture is a screen content, the quantization parameter of the current coding unit block, and the like may be considered in determining the blending area width information.

According to an embodiment, the width of the blending area for the current coding unit block may be selected from M width candidates determined with respect to the size of the current coding unit block. Here, M is an integer greater than or equal to 2. If two width candidates are used in determining the width of the blending area, two width candidates may be selected from various width candidates such as 0, A/4, A/2, A, 2A, 4A, and 8A according to the size of the current coding unit block. In addition, one of the two selected width candidates may be selected for prediction of the current coding unit block.

At this time, the size of the coding unit block may be defined as the width, height, aspect ratio (width/height or height/width), min(width, height), or max(width, height) of the coding unit block. Here, min(width, height) and max(width, height) represent the smaller and larger values among the width and height, respectively.

For example, if 0 and A are selected as width candidates of the blending area according to the size of the current coding unit block, the width of the blending area of the current coding unit block may be determined based on blending area width information indicating one of the two selected width candidates. The blending area width information may be determined from the current coding unit block or a picture to which the current coding unit block belongs. Alternatively, the blending area width information may be parsed from a bitstream.

Equation 4 shows a method of selecting two width candidates according to the size of a coding unit block. In the present disclosure, the width candidate substantially represents a candidate of the value of $\tau$.

[Equation 4]

$$\tau\,(threshold) = \begin{cases} (0,A), & size \leq S_1 \\ (A,4A), & S_1 < size \leq S_2 \\ (4A,8A), & size > S_2 \end{cases}$$

In Equation 4, $S_1$ and $S_2$ denote arbitrary different positive integers ($S_1 < S_2$). In Equation 4, $S_2$ may be set to be smaller than the maximum width of the coding unit block or the maximum height of the coding unit block. According to Equation 4, two width candidates for the blending area are determined based on the value of size, which is determined by the width and height of the coding unit block, and the two variables $S_1$ and $S_2$. In addition, the width of the blending area of the current coding unit block among the two width candidates may be determined based on the blending area width information.

For example, if the derived value of the size is greater than $S_1$ and less than $S_2$, A and 4A are selected as two width candidates. Then, the optimal blending area is determined from among A and 4A. In Equation 4, (0, A), (A, 4A), and (4A, 8A) are used as width candidate pairs for each size condition. However, depending on the embodiment, a different width candidate pair may be applied to each size condition.

In Equation 4, only two width candidates are defined for each size condition, but depending on the embodiment, three or more width candidates may be defined for each size condition.

The final prediction signal for the geometric partitioning mode is generated by a weighted sum of two independently predicted prediction signals. At this time, the weighted sum may be calculated based on a ramp function defined by the width of the blending area ($-\tau$ and $\tau$) and the maximum value W of the weight, as shown in Fig. 5. $\tau$ may be one of 0, A/4, A/2, A, 2A, 4A, 8A, etc.

According to an embodiment, the maximum value W of the weight may be fixed to 8. According to Equation 1, if the maximum value W of the weight increases, the precision of the weight applied to the weighted sum operation improves. Therefore, when the width of the blending area increases and the precision of the weight needs to increase, prediction accuracy can be improved by increasing the maximum value W of the weight.

Therefore, the fixed maximum value W of the weight may not always be optimal in an embodiment in which the width of the blending area is variably adjusted. Therefore, when the width of the blending area is variably determined, it may be efficient to also variably determine the maximum value W of the weight. Therefore, hereinafter, an embodiment in which the maximum value of the weight is variably determined by considering the width of the blending area will be described. If the maximum value W of the weight increases, the precision of the weight of the blending area increases, thereby improving prediction accuracy.

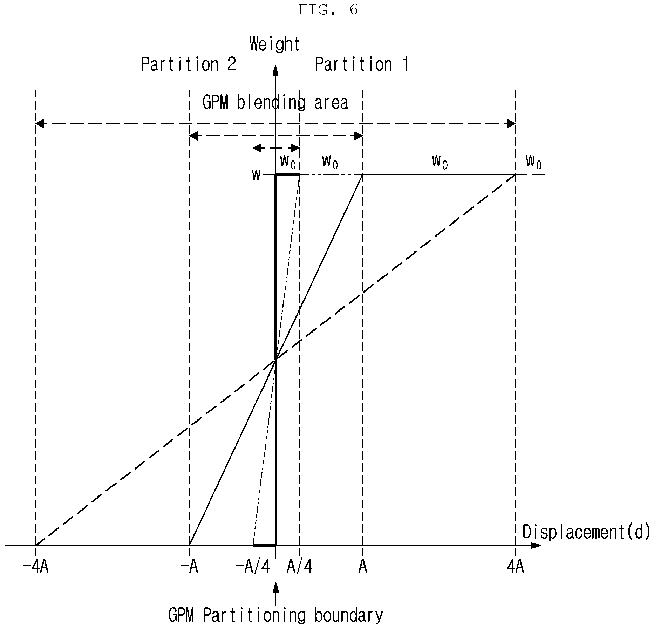

FIG. 6 shows weights for the various widths of a blending area.

According to FIG. 6, regardless of the width (0, A/4, A, 4A) of the blending area, the maximum value of the weight $W_0$ of $P_0$ is determined to be W. At this time, the maximum value W of the weight $W_0$ may be determined to be an arbitrary positive integer. For example, the maximum value W of the weight $W_0$ may be determined to be 2, 4, 8, 16, 32, 64, etc. At this time, when W increases, precision of the weight increases, so that prediction accuracy in the blending area can be improved. In FIG. 6, 0, A/4, A and 4A are presented as the width of the blending area, but the width of the blending area may be determined to be another value.

When the width of the fixed blending area is applied, the method of variably adjusting the precision of the weight does not have much meaning. However, when the width of the blending area is adaptively determined based on the size of the coding unit block, the prediction accuracy of the final prediction block can be improved by adjusting the precision of the weight according to the maximum value W of the weight $W_0$.

In the embodiment of FIG. 6, the maximum value W of the weight for various widths of the blending area may be variably determined. However, the maximum value W of the weight is not determined by considering the width of each blending area. That is, since the maximum value W of the weight is fixed regardless of the width of the blending area, there may be a limitation in determining the optimal weight for the width of each different blending area.

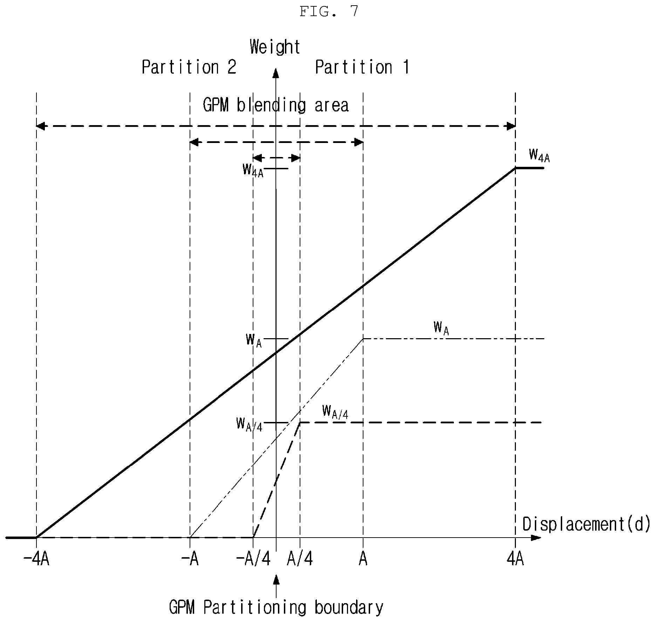

FIG. 7 shows a maximum value of a weight that is variably determined according to a width of a blending area.

According to FIG. 7, if the value of $\tau$ of the blending area is A/4, the maximum value of the weight may be determined to be $W_{A/4}$. If the value of $\tau$ of the blending area is A, the maximum value of the weight may be determined to be $W_A$. In addition, if the value of $\tau$ of the blending area is 4A, the maximum value of the weight may be determined to be $W_{A/4}$. $W_{A/4}$, $W_A$ and $W_{4A}$ used as the maximum values of the weight in this embodiment are all arbitrary positive integer values.

Also, in FIG. 7, although A/4, A, and 4A are used as examples for the value of $\tau$ of the blending area, the value of $\tau$ may be determined arbitrarily. In addition, in FIG. 7, the order of the sizes is determined to be $W_{A/4} \leq W_A \leq W_{4A}$ according to the width of the blending area. However, depending on the embodiment, the order of the sizes of $W_{A/4}$, $W_A$, and $W_{4A}$ may be set differently from FIG. 7.

Regarding the size of the coding unit block, the embodiment of FIG. 7 may be applied even when one of N width candidates with different magnitudes is used instead of one fixed width of the blending area. Here, N is an integer of $N \geq 2$.

According to an embodiment, the maximum value of the corresponding weight may be determined based on the largest width candidate among the N width candidates of the blending area. For example, if A and 4A are used as width candidates of the blending area, the maximum value of the weight may be the weight $W_{4A}$ corresponding to 4A, which is the larger width candidate among the width candidates of the blending area.

Conversely, the maximum value of the weight may be determined based on the smallest width candidate among the N width candidates of the blending area. For example, if A and 4A are used as width candidates of the blending area, the maximum value of the weight may be the weight $W_A$ corresponding to A, which is the smallest width candidate among the width candidates of the blending area.

Alternatively, the maximum value of the weight may be determined based on the selected width candidate among the N width candidates of the blending area. For example, if A is selected among the width candidates A and 4A of the blending area, the maximum value of the weight may be the weight $W_A$ corresponding to A, which is the selected width candidate.

In FIGS. 5 to 7, the final prediction value in a boundary area is determined linearly based on a displacement from a partition boundary of a sample. Specifically, the weight of the current pixel is determined by considering the displacement from the partitioning boundary to the current pixel position based on the ramp function and the width of the blending area.

For example, according to FIG. 5, the ramp function is a linear function with a constant slope from -A to A. Therefore, a weight is assigned in proportion to the displacement for pixels within the blending area from -A to A. This weight assignment method tends to be suitable for encoding video images with uniform motion. However, it may not be suitable for encoding video images with accelerated motion or general natural content. Therefore, it may be more efficient to determine the weight $W_0$ based on a nonlinear function to solve this problem.

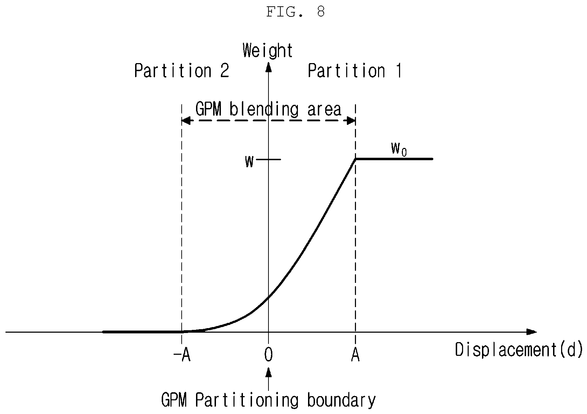

FIG. 8 shows an example of a graph of a weight of a prediction signal of the first partition 402 having nonlinearity.

In FIG. 8, the value of $\tau$ representing a distance from the partitioning boundary to the end of the blending area is determined to be A. In FIG. 8, W also means the maximum value of the weight and may be set to an arbitrary positive integer value. Based on the nonlinear function of FIG. 8, the weight $W_0$ at each prediction pixel position may be calculated based on the value of $\tau$ and the value of W as in Equation 5. According to FIG. 8 and Equation 5, as d representing the distance of the sample from the partitioning boundary increases, the slope of the graph increases. In Equation 5 below,

[Equation 5]

$$W_0 = \begin{cases} 0, & d(x,y) \leq -\tau \\ \frac{W}{4\tau^2}(d(x,y) + \tau)^2, & -\tau < d(x,y) \leq \tau \\ W, & d(x,y) > \tau \end{cases}$$

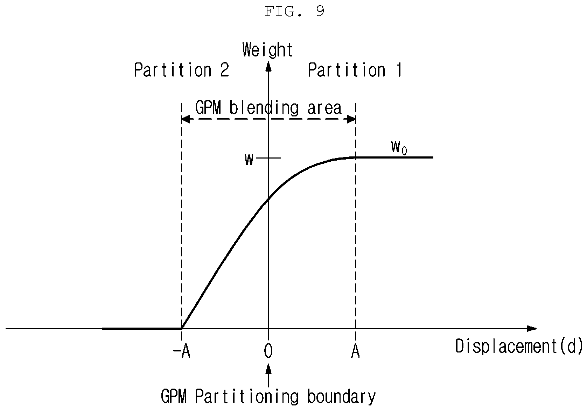

FIG. 9 shows another example of a graph of a weight of a prediction signal of the first partition 402 having nonlinearity.

Similar to Fig. 8, the value of $\tau$ representing a distance from the partitioning boundary to the end of the blending area in FIG. 9 is determined to be A. In addition, W means the maximum value of the weight and may be set to an arbitrary positive integer value. Based on the nonlinear function of FIG. 9, the weight $W_0$ at each prediction pixel position may be calculated based on the value of $\tau$ and the value of W as in Equation 6. Contrary to FIG. 8 and Equation 5, according to FIG. 9 and Equation 6, as d increases, the slope of the graph decreases.

[Equation 6]

$$W_0 = \begin{cases} 0, & d(x,y) \leq -\tau \\ -\frac{w}{4\tau^2}(d(x,y) - \tau)^2 + w, & -\tau < d(x,y) \leq \tau \\ w, & d(x,y) > \tau \end{cases}$$

In Equations 5 and 6, d(x,y) represents the displacement from the partitioning boundary to the pixel at the position (x,y). The weight $W_0$ of Equation 5 may be expressed using a quadratic function as shown in FIG. 8. In addition, the weight $W_0$ of Equation 6 may also be expressed using a quadratic function as shown in FIG. 9.

In Equations 5 and 6, a quadratic function is used as a nonlinear function. However, depending on the embodiment, various nonlinear functions such as a higher-order function such as a cubic function or higher, an exponential function, or a logarithmic function may be used.

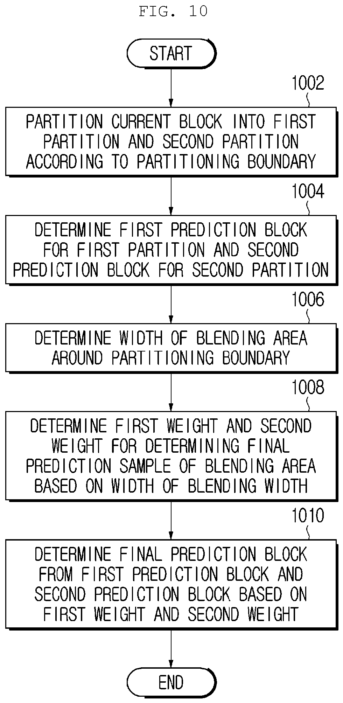

FIG. 10 shows an embodiment of a prediction method according to a geometric partitioning mode according to the present invention.

In step 1002, a current block is partitioned into a first partition and a second partition according to a partitioning boundary. The partitioning boundary may be defined by a partitioning direction and a partitioning position. In addition, the partitioning position may be defined as a distance from a block center point or a starting point of a partitioning boundary on a block edge, etc.

In step 1004, a first prediction block for the first partition and a second prediction block for the second partition are determined. The first prediction block and the second prediction block have the same size as the current block. However, when the first prediction block and the second prediction block are combined to determine a final prediction block, the samples of the first partition are determined by the samples of the first prediction block, and the samples of the second partition are determined by the samples of the second prediction block. However, the samples of the blending area around the partitioning boundary of the first partition and the second partition may be determined by a weighted sum of the samples of the first prediction block and the samples of the second prediction block. Therefore, in steps 1006 and 1008, the blending area and the weighted values to be used in the blending area are determined.

In step 1006, the width of the blending area around the partitioning boundary is determined.

According to an embodiment, the width of the blending area may be determined based on the size value of the current block.

According to an embodiment, the width of the blending area may be determined based on a size interval that includes the size value of the current block.

According to an embodiment, the width of the blending area may be selected from among a plurality of width candidates corresponding to the size interval including the size value of the current block. The width of the blending area may be selected from among the plurality of width candidates based on blending area width information indicating the width of the blending area parsed from a bitstream.

Alternatively, the width of the blending area may be determined based on blending area width information indicating a width candidate of the blending area among the plurality of width candidates determined regardless of the size of the current block.

According to an embodiment, the size value of the current block may be determined by at least one of the width of the current block, the height of the current block, a larger value among the width and height of the current block, a smaller value among the width and height of the current block, or a ratio of the width and height of the current block.

According to an embodiment, the width of the blending area may be determined depending on whether a current picture or a current slice including the current block is a screen content image. If the current picture or the current slice is a screen content image, the width of the blending area may be determined to be 0 regardless of the size of the current block. Alternatively, under the above condition, the width of the blending area may be determined to be A/4 regardless of the size of the current block.

In step 1008, based on the width of the blending area, a first weight and a second weight for determining a final prediction sample of the blending area are determined.

According to an embodiment, step 1008 may include a step of determining maximum values of the first weight and the second weight based on the width of the blending area, and a step of determining the first weight and the second weight based on the maximum values. In addition, the maximum values of the first weight and the second weight may be set to increase as the width of the blending area increases. The maximum values of the first weight and the second weight may be determined to be one of 2, 4, 8, 16, 32, 64, and 128 according to the width of the blending area.

According to an embodiment, the step 1008 may include a step of determining maximum values of the first weight and the second weight based on width candidates of the blending area applied to the current block and a step of determining the first weight and the second weight based on the maximum values. The maximum values of the first weight and the second weight may be determined based on a largest width candidate or a smallest width candidate among the width candidates of the blending area. The maximum values of the first weight and the second weight may be determined to be one of 2, 4, 8, 16, 32, 64 and 128 based on at least one of a plurality of width candidates of the blending area.

According to an embodiment, regardless of the width of the blending area, the maximum values of the first weight and the second weight may be fixed. For example, the maximum values of the first weight and the second weight may be fixed to one of 2, 4, 8, 16, 32, 64 and 128.

According to an embodiment, the first weight and the second weight may be determined based on the position of the sample of the blending area and the distance of the partitioning boundary.

According to an embodiment, the first weight and the second weight may be determined based on a nonlinear function that receives as input the position of the sample of the blending area and the distance of the partitioning boundary. The nonlinear function may be composed of at least one of a higher-order function such as a quadratic function or higher, an exponential function, and a logarithmic function.

In step 1010, a final prediction block is determined from the first prediction block and the second prediction block based on the first weight and the second weight. In the final prediction block, samples of the first partition are derived from samples of the first prediction block, and samples of the second partition are derived from samples of the second prediction block. In addition, samples of the blending area around the partitioning boundary of the first partition and the second partition are determined by a weighted sum of samples of the first prediction block and samples of the second prediction block.

The final prediction block of the current block determined in steps 1002 to 1010 may be used to encode and decode the current block.

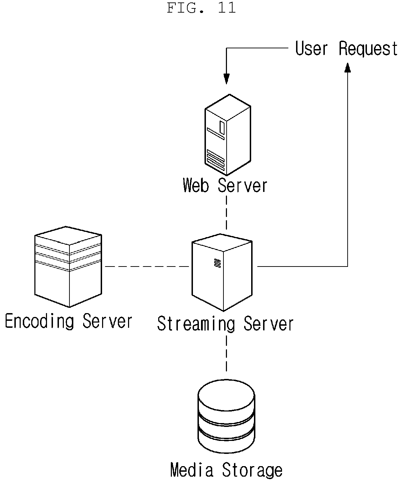

FIG. 11 exemplarily illustrates a content streaming system to which an embodiment according to the present invention is applicable.

As illustrated in FIG. 11, a content streaming system to which an embodiment of the present invention is applied may largely include an encoding server, a streaming server, a web server, a media storage, a user device, and a multimedia input device.

The encoding server compresses content received from multimedia input devices such as smartphones, cameras, CCTVs, etc. into digital data to generate a bitstream and transmits it to the streaming server. As another example, if multimedia input devices such as smartphones, cameras, CCTVs, etc. directly generate a bitstream, the encoding server may be omitted.

The bitstream may be generated by an image encoding method and/or an image encoding apparatus to which an embodiment of the present invention is applied, and the streaming server may temporarily store the bitstream in the process of transmitting or receiving the bitstream.

The streaming server transmits multimedia data to a user device based on a user request via a web server, and the web server may act as an intermediary that informs the user of any available services. When a user requests a desired service from the web server, the web server transmits it to the streaming server, and the streaming server may transmit multimedia data to the user. At this time, the content streaming system may include a separate control server, and in this case, the control server may control commands/responses between devices within the content streaming system.

The streaming server may receive content from a media storage and/or an encoding server. For example, when receiving content from the encoding server, the content may be received in real time. In this case, in order to provide a smooth streaming service, the streaming server may store the bitstream for a certain period of time.

Examples of the user devices may include mobile phones, smartphones, laptop computers, digital broadcasting terminals, personal digital assistants (PDAs), portable multimedia players (PMPs), navigation devices, slate PCs, tablet PCs, ultrabooks, wearable devices (e.g., smartwatches, smart glasses, HMDs), digital TVs, desktop computers, digital signage, etc.

Each server in the above content streaming system may be operated as a distributed server, in which case data received from each server may be distributed and processed.

The above embodiments may be performed in the same or corresponding manner in the encoding apparatus and the decoding apparatus. In addition, an image may be encoded/decoded using at least one or a combination of at least one of the above embodiments.

The order in which the above embodiments are applied may be different in the encoding apparatus and the decoding apparatus. Alternatively, the order in which the above embodiments are applied may be the same in the encoding apparatus and the decoding apparatus.

The above embodiments may be performed for each of the luma and chroma signals. Alternatively, the above embodiments for the luma and chroma signals may be performed identically.

In the above-described embodiments, the methods are described based on the flowcharts with a series of steps or units, but the present invention is not limited to the order of the steps, and rather, some steps may be performed simultaneously or in different order with other steps. In addition, it should be appreciated by one of ordinary skill in the art that the steps in the flowcharts do not exclude each other and that other steps may be added to the flowcharts or some of the steps may be deleted from the flowcharts without influencing the scope of the present invention.

The embodiments may be implemented in a form of program instructions, which are executable by various computer components, and recorded in a computer-readable recording medium. The computer-readable recording medium may include stand-alone or a combination of program instructions, data files, data structures, etc. The program instructions recorded in the computer-readable recording medium may be specially designed and constructed for the present invention, or well-known to a person of ordinary skilled in computer software technology field.

A bitstream generated by the encoding method according to the above embodiment may be stored in a non-transitory computer-readable recording medium. In addition, a bitstream stored in the non-transitory computer-readable recording medium may be decoded by the decoding method according to the above embodiment.

Examples of the computer-readable recording medium include magnetic recording media such as hard disks, floppy disks, and magnetic tapes; optical data storage media such as CD-ROMs or DVD-ROMs; magneto-optimum media such as floptical disks; and hardware devices, such as read-only memory (ROM), random-access memory (RAM), flash memory, etc., which are particularly structured to store and implement the program instruction. Examples of the program instructions include not only a mechanical language code formatted by a compiler but also a high level language code that may be implemented by a computer using an interpreter. The hardware devices may be configured to be operated by one or more software modules or vice versa to conduct the processes according to the present invention.

Although the present invention has been described in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

**Industrial Applicability**

The present invention may be used in an apparatus for encoding/decoding an image and a recording medium for storing a bitstream.

**Claims**

1. An image decoding method comprising:

   partitioning a current block into a first partition and a second partition according to a partitioning boundary;
   determining a first prediction block for the first partition and a second prediction block for the second partition;
   determining a width of a blending area around the partitioning boundary;
   determining a first weight and a second weight for determining a final prediction sample of the blending area based on the width of the blending area; and
   determining a final prediction block from the first prediction block and the second prediction block based on the first weight and the second weight.

2. The image decoding method of claim 1, wherein in the determining the width of the blending area, the width of the blending area is determined based on a size value of the current block.

3. The image decoding method of claim 2, wherein the width of the blending area is determined according to a size interval including the size value of the current block.

4. The image decoding method of claim 3, wherein the width of the blending area is selected from among a plurality of width candidates corresponding to the size interval including the size value of the current block.

5. The image decoding method of claim 2, wherein the size value of the current block is determined by at least one of a width of the current block, a height of the current block, a larger value among the width and height of the current block, a smaller value among the width and height of the current block, or a ratio of the width and height of the current block.

6. The image decoding method of claim 1, wherein the width of the blending area is selected from among a plurality of width candidates based on blending area width information indicating the width of the blending area parsed from a bitstream.

7. The image decoding method of claim 1, wherein the width of the blending area is determined depending on whether a current picture or a current slice including the current block is a screen content image.

8. The image decoding method of claim 7, wherein the width of the blending area is determined to be 0 or 1/4 when the current picture or the current slice including the current block is a screen content image.

9. The image decoding method of claim 1, wherein the determining the first weight and the second weight comprises:

   determining maximum values of the first weight and the second weight based on the width of the blending area; and
   determining the first weight and the second weight based on the maximum values.

10. The image decoding method of claim 9, wherein in the determining the maximum values of the first weight and the second weight, the maximum values of the first weight and the second weight are set to increase as the width of the blending area increases.

11. The image decoding method of claim 1, wherein the determining the first weight and the second weight comprises:

determining maximum values of the first weight and the second weight based on width candidates of the blending area applied to the current block; and
determining the first weight and the second weight based on the maximum values.

12. The image decoding method of claim 11, wherein the determining the maximum values of the first weight and the second weight comprises determining the maximum values of the first weight and the second weight based on a largest width candidate or a smallest width candidate among the width candidates of the blending area.

13. The image decoding method of claim 1, wherein in the determining the first weight and the second weight, the first weight and the second weight are determined based on a position of a sample of the blending area and a distance of the partitioning boundary.

14. The image decoding method of claim 13, wherein the first weight and the second weight are determined based on a nonlinear function which receives as input the position of the sample of the blending area and the distance of the partitioning boundary.

15. The image decoding method of claim 14, wherein the nonlinear function is composed of at least one of a higher-order function such as a quadratic function or higher, an exponential function or a logarithmic function.

16. An image encoding method comprising:

partitioning a current block into a first partition and a second partition according to a partitioning boundary;
determining a first prediction block for the first partition and a second prediction block for the second partition;
determining a width of a blending area around the partitioning boundary;
determining a first weight and a second weight for determining a final prediction sample of the blending area based on the width of the blending area; and
determining a final prediction block from the first prediction block and the second prediction block based on the first weight and the second weight.

17. A computer-readable recording medium storing a bitstream generated by an image encoding method, the image encoding method comprising:

partitioning a current block into a first partition and a second partition according to a partitioning boundary;
determining a first prediction block for the first partition and a second prediction block for the second partition;
determining a width of a blending area around the partitioning boundary;
determining a first weight and a second weight for determining a final prediction sample of the blending area based on the width of the blending area; and
determining a final prediction block from the first prediction block and the second prediction block based on the first weight and the second weight.

18. A method of transmitting a bitstream generated by an image encoding method, the method comprising:

encoding an image based on the image encoding method; and
transmitting a bitstream including the encoded image,
wherein the image encoding method comprises:

partitioning a current block into a first partition and a second partition according to a partitioning boundary;
determining a first prediction block for the first partition and a second prediction block for the second partition;
determining a width of a blending area around the partitioning boundary;
determining a first weight and a second weight for determining a final prediction sample of the blending area based on the width of the blending area; and
determining a final prediction block from the first prediction block and the second prediction block based on the first weight and the second weight.

FIG. 1

FIG. 2

EP 4 498 675 A1

FIG. 3

FIG. 4

FIG. 5

FIG. 6

GPM Partitioning boundary

FIG. 7

FIG. 8

FIG. 9

FIG. 10

START

1002

PARTITION CURRENT BLOCK INTO FIRST
PARTITION AND SECOND PARTITION
ACCORDING TO PARTITIONING BOUNDARY

1004

DETERMINE FIRST PREDICTION BLOCK
FOR FIRST PARTITION AND SECOND
PREDICTION BLOCK FOR SECOND PARTITION

1006

DETERMINE WIDTH OF BLENDING AREA
AROUND PARTITIONING BOUNDARY

1008

DETERMINE FIRST WEIGHT AND SECOND
WEIGHT FOR DETERMINING FINAL
PREDICTION SAMPLE OF BLENDING AREA
BASED ON WIDTH OF BLENDING WIDTH

1010

DETERMINE FINAL PREDICTION BLOCK
FROM FIRST PREDICTION BLOCK AND
SECOND PREDICTION BLOCK BASED ON
FIRST WEIGHT AND SECOND WEIGHT

END

FIG. 11

<div align="center">

**INTERNATIONAL SEARCH REPORT**

</div>

| International application No. |
|---|
| **PCT/KR2023/008461** |

| A. | CLASSIFICATION OF SUBJECT MATTER |
|---|---|

**H04N 19/119**(2014.01)i; **H04N 19/513**(2014.01)i; **H04N 19/176**(2014.01)i; **H04N 19/124**(2014.01)i; **H04N 19/13**(2014.01)i; **H04N 19/60**(2014.01)i; **H04N 19/423**(2014.01)i; **H04N 19/184**(2014.01)i; **H04N 19/96**(2014.01)i; **H04N 19/11**(2014.01)i

According to International Patent Classification (IPC) or to both national classification and IPC

| B. | FIELDS SEARCHED |
|---|---|

Minimum documentation searched (classification system followed by classification symbols)

H04N 19/119(2014.01); H04N 19/105(2014.01); H04N 19/107(2014.01); H04N 19/11(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 분할(partition), 경계(edge), 예측(predict), 혼합(blending), 너비 (width), 가중(weight)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0061984 A (QUALCOMM INCORPORATED) 13 May 2022 (2022-05-13)<br>See paragraphs [0022], [0025], [0031], [0060] and [0136]; and claims 1 and 7. | 1-18 |
| Y | KIDANI, Yoshitaka et al. Non-EE2: Adaptive width for GPM blending area. JVET-Z0059-v2, Joint Video Experts Team (JVET) of ITU-T SG 16 WP 3 and ISO/IEC JTC 1/SC 29, 26th Meeting, by teleconference. pp. 1-5, 20 April 2022.<br>See pages 1-3; and figures 1-3. | 1-18 |
| Y | KR 10-2022-0051319 A (ELECTRONICS AND TELECOMMUNICATIONS RESEARCH INSTITUTE et al.) 26 April 2022 (2022-04-26)<br>See paragraphs [0101] and [0152]. | 14-15 |
| A | KR 10-2022-0053567 A (BEIJING BYTEDANCE NETWORK TECHNOLOGY CO., LTD. et al.) 29 April 2022 (2022-04-29)<br>See paragraphs [0293] and [0790]-[0791]. | 1-18 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2023** | **22 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 498 675 A1

| | INTERNATIONAL SEARCH REPORT | International application No. |
|---|---|---|
| | | **PCT/KR2023/008461** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0044754 A (ALIBABA GROUP HOLDING LIMITED) 11 April 2022 (2022-04-11)<br>See claims 1-16. | 1-18 |

Form PCT/ISA/210 (second sheet) (July 2022)

31

# EP 4 498 675 A1

| INTERNATIONAL SEARCH REPORT | | | | International application No. | | | |
| --- | --- | --- | --- | --- | --- | --- | --- |
| Information on patent family members | | | | PCT/KR2023/008461 | | | |

| Patent document cited in search report | | | Publication date (day/month/year) | Patent family member(s) | | | Publication date (day/month/year) |
| --- | --- | --- | --- | --- | --- | --- | --- |
| KR | 10-2022-0061984 | A | 13 May 2022 | CN | 114402594 | A | 26 April 2022 |
| | | | | EP | 4035365 | A1 | 03 August 2022 |
| | | | | US | 11405619 | B2 | 02 August 2022 |
| | | | | US | 2021-0092392 | A1 | 25 March 2021 |
| | | | | WO | 2021-061784 | A1 | 01 April 2021 |
| KR | 10-2022-0051319 | A | 26 April 2022 | CN | 110024385 | A | 16 July 2019 |
| | | | | CN | 110024385 | B | 30 June 2023 |
| | | | | EP | 3550835 | A1 | 09 October 2019 |
| | | | | JP | 2020-501427 | A | 16 January 2020 |
| | | | | KR | 10-2022-0158210 | A | 30 November 2022 |
| | | | | KR | 10-2467487 | B1 | 16 November 2022 |
| | | | | US | 11503316 | B2 | 15 November 2022 |
| | | | | US | 2023-0007829 | A1 | 12 January 2023 |
| | | | | WO | 2018-101687 | A1 | 07 June 2018 |
| KR | 10-2022-0053567 | A | 29 April 2022 | CN | 114303382 | A | 08 April 2022 |
| | | | | EP | 4008108 | A1 | 08 June 2022 |
| | | | | JP | 2022-545949 | A | 01 November 2022 |
| | | | | US | 11689735 | B2 | 27 June 2023 |
| | | | | US | 2023-0232032 | A1 | 20 July 2023 |
| | | | | WO | 2021-037277 | A1 | 04 March 2021 |
| KR | 10-2022-0044754 | A | 11 April 2022 | CN | 114208197 | A | 18 March 2022 |
| | | | | EP | 3987795 | A1 | 27 April 2022 |
| | | | | JP | 2022-544350 | A | 18 October 2022 |
| | | | | US | 11356677 | B2 | 07 June 2022 |
| | | | | US | 2022-0272359 | A1 | 25 August 2022 |
| | | | | WO | 2021-030019 | A1 | 18 February 2021 |

Form PCT/ISA/210 (patent family annex) (July 2022)